# EUROPEAN PATENT SPECIFICATION

(11) **EP 3 533 576 B1**
(45) Date of publication and mention of the grant of the patent: **30.09.2020**
(21) Application number: 18159417.7
(22) Date of filing: 01.03.2018
(51) Int. Cl.: B29B 17/00, B29C 43/56

(54) **COMPACTING DEVICE FOR THIN SHEETS OF THERMOPLASTIC MATERIAL**
VERDICHTUNGSVORRICHTUNG FÜR DÜNNSCHICHTEN AUS THERMOPLASTISCHEM MATERIAL
DISPOSITIF DE COMPACTAGE DE FEUILLES MINCES DE MATÉRIAU THERMOPLASTIQUE

(43) Date of publication of application: 04.09.2019
(73) Proprietor: Cadaval San Roman, Beatriz, 28224 Pozuelo de Alarcon (ES); Jimenez Losada, Sandra Pilar, Madrid (ES); Muñoz Sanz, José Luis, 28049 Madrid (ES)
(72) Inventor: Cadaval San Roman, Beatriz, 28224 Pozuelo de Alarcon (ES); Jimenez Losada, Sandra Pilar, Madrid (ES); Muñoz Sanz, José Luis, 28049 Madrid (ES)
(74) Representative: Lahidalga de Careaga, Jose Luis

(56) References cited:
- WO-A1-2013/186762
- DE-A1- 4 202 095
- FR-A1- 2 668 732
- FR-A1- 2 692 190
- GB-A- 2 255 977
- GB-A- 2 512 921
- JP-A- H0 330 918
- US-A- 5 470 521

## Description

### OBJECT OF THE INVENTION

The object of the invention is a device that compacts thin sheets of thermoplastic material in order to facilitate their subsequent recycling by means of a suction air current combined with another drive current by means of heated air. This allows taking advantage of the fact that these sheets are not contaminated, simplifying the recycling process. Once compacted, the result can be added to the rest of the thermoplastic waste in the mill and facilitate their milling.

### BACKGROUND OF THE INVENTION

The current procedures and devices used for recycling thermoplastics does not make possible the simultaneous recycling of thin sheets of this material with the rest of the materials, since these procedures are based on the milling of the thermoplastic scraps to be recycled, with the added problem that the thin sheets of this material are not ground easily with these devices. Furthermore, they contribute to the poor functioning of these mills by becoming tangled around its elements, soiling them and dulling the tools, resulting in having to try to remove and separate the thin sheets from the plastic waste in order to improve the milling system, consequently these thin sheets are not recycled on many occasions, requiring specific processes that complicate and add to the recycling costs.

There are known devices, on one hand, that function according to the pressing principle with presses and, other devices whose pressing unit or whose pressing units have cylinders. These devices are optimised for the processing of plastic containers.

Given that these scraps can also contain a significant quantity of closed containers, a perforator is often placed in front of the pressing device or devices, according to the documents DE4338561A1 or US5,642,661-A.

With the aim of being able to reduce the technical cost of these devices, there are also known devices in which perforation means are provided in pressing pieces of the pressing device or devices, for example, in a device for compacting empty beverage containers according to document DE10055201A1. This device presents a conveying section that essentially narrows in the shape of a funnel and in which the beverage containers are introduced and compacted successively by the action of conveying and compressing devices that laterally delimit the conveyance section.

In the manufacturing of adhesive plastic tape, as well as in the manufacturing of other cited materials, scraps are created, for example, in the form of marginal strips that correspond to the cutting of the material in the production process, as well as scraps from thermoplastic material, in particular of polyethylene, polypropylene, polystyrene, polyester and polyvinyl chloride (PVC). Even using optimised production processes, the part of these scraps - among others, also product waste- in the production ascends to approximately 10% and generally corresponds, in the manufacturing of the plastic sheets, to scraps of sheets of a different size, chopped, preferably between 1 and 10 mm in length.

Document DE-A-3831023 publishes a procedure for the preparation and subsequent use of soiled plastic products, in which the chopped sheets are mixed in a cleansing solution of an organic solvent and, then, they are extracted to an area for washing, turbulence free, and immediately pre-dried mechanically using centrifuge force and, afterwards, thermally dried using hot gas in which the solvent returns from the drying stage to washing stage. However, this known procedure cannot economically achieve the objective of this invention, that is, the elimination of the thinnest sheets of plastic for their subsequent recycling, since the procedure is directed with those procedure phases towards the cleaning of the contaminants from the mentioned scraps of plastic, since the scraps of sheets cannot be dissolved sufficiently, in particular the adhesives adhered firmly to the scraps of sheets, for example, adhesives insoluble in water and in glycol, based on rubber.

The end purpose of the invention is to allow separate compacting of these thin sheets just after their use in order to take advantage of the fact that they are not yet contaminated, simplifying the recycling process, and once compacted, to be able to add them to the rest of the thermoplastic waste in the mill and facilitate their milling.

Reference is made to GB 2512921 (STYROMELT LTD) and US 5470521 (WENZEL RICHARD) are found to be the closest prior art.

GB 2512921 discloses an apparatus and method for thermally compacting a polymer and in particular synthetic polymeric textile materials. It includes an axial fan although the fan is not shown and the position is not disclosed in detail, it could be anywhere in the exhaust line. The fan shown in this apparatus however is there to provide a partial vacuum, and not to drive the air current as it does in the claimed invention.

It also further includes an array of parts that together can be regarded as a heater mould.

US 5470521 discloses an apparatus for thermally densifying thermoplastic articles, the apparatus includes an axial fan, but in this case it only serves for heating purposes, an inlet nozzle, a heated mould housed in the intermediate part of the prismatic structure where this heated mould is provided with a plurality of slots that allow the passing of the suction air current, a guiding conduit between the inlet nozzle and the heated mould.

### DESCRIPTION OF THE DRAWINGS

In order to complement the description that is being made and with the aim of aiding a better understanding of the characteristics of the invention, according to a preferred example of its practical realisation, a set of drawings are attached as an integral part of this description, in which the following, as an example but not limited to it, has been represented:

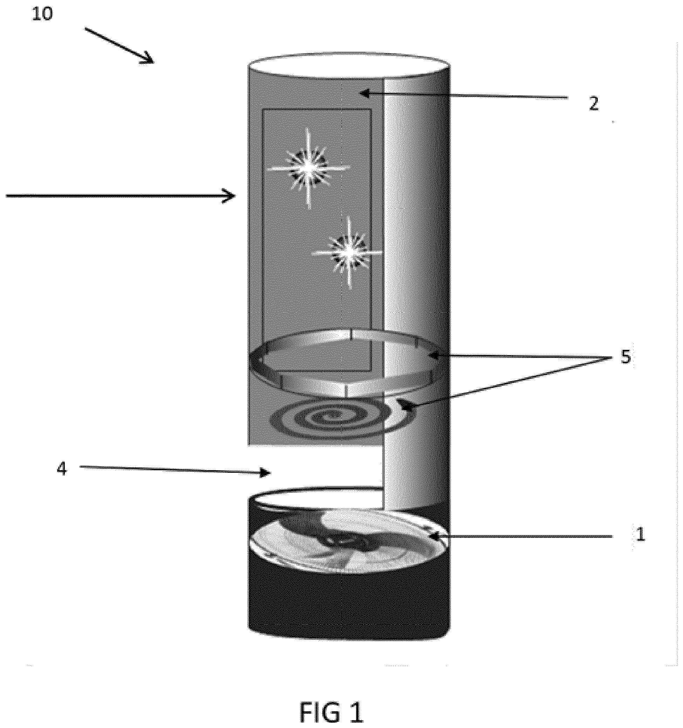

Figure 1. shows an outline of the thermoplastic material compacting device of this invention.

### BRIEF DESCRIPTION OF THE INVENTION

The scraps of post-consumption plastic sheets have a very poor ratio of surface area to contaminant and therefore require laborious processing. In this type of problematic cases, the processing companies and the builders of machines are obliged to avoid recycling the thinnest sheets of material. The turn-key installation, composed by separation of foreign materials, wet shredding stage and plastic compactor, manufactures, with 7,000 tons of scraps annually, loose agglomerates with high apparent density in bulk, which are appropriate for the production of injection-moulded articles.

This invention solves the problem of the plastic sheets or film for recycling, since the compacting is achieved by means of a suction air current, combined with another of heated impulsion. This double effect of suction and impulsion will achieve, through a system of conduits that carry the air driven by a fan in its lower part to the upper part of the device in such a way that it drives the air current in descending form, which permits dragging the plastic sheets through a guiding conduit to a heated mould.

### PREFERRED REALISATION OF THE INVENTION

This realisation is a device that compacts the thermoplastic sheets or film, in the form of tablets, for subsequent recycling.

The device of this invention includes an axial fan (1) with power between 1000 and 2000 W, which is coupled in the lower part to an essentially prismatic structure (10), where this fan allows the suction by means of air, that is, that this fan (1) drives the air current in a descending manner, in such a way that the plastic scraps that are introduced in the upper part of the prismatic structure (10) through an inlet nozzle (2) are dragged by a guiding conduit to reach a heated mould (3) housed in the intermediate part of the prismatic structure (1) and as a continuation from the inlet nozzle (1), where these plastic materials are melted and compacted (5).

The heated mould reaches temperatures between 100 and 250º C, and is provided with a plurality of slots that permit the passing of the suction current generated by the fan (2) which is housed in the lower part of the prismatic structure (10). The heated mould (3) is moveable, which allows the removal of the tablet of compacted plastic material. In addition, this heated mould (3) is treated on the surface to impede the adherence of the melted and compacted thermoplastic material (5). Within the prismatic structure (10) and between the heated mould (3) and the fan (1) there is a slot (4) for the extraction of the mentioned tablet of compacted plastic material (5).

Both the heated mould (3) and the fan (1) are driven electrically, and the system as a whole will be compact and can be fastened to the wall. In addition, the set can be complemented with a collection bag of non-plastic material.

The heated mould (3) includes temperature and safety sensors to avoid overheating. Control and supervision systems are provided, depending on the dimensions of the moulds. The heated moulds allow varying the temperature of the mould easily, being able to adjust it with great precision in a short period of time. With this, the losses of energy are reduced when applying it directly to the mould.

The elements that compose the heated mould (3) will be coated with a material that permits little adhesion with the thermoplastic material and facilitates its demoulding. The heated mould (3) will have a means of temperature control that optimises the process.

The heated mould (3) is moveable, since part of it can be dismantled and moved in order to facilitate the removal of the thermoplastic tablet once it is compacted. It will have a means to detect the filling level.

The device is susceptible to having an alternative system of mechanical compression; in addition, this device can eventually have a spraying inlet of products that decontaminate the sheets if necessary. The tablets produced by the compacting will be of a prismatic shape of a preferably hexagonal section.

For all that is described above, one can note that the device allows the separate compacting of thin sheets just after their use in order to take advantage of the fact that they are not yet contaminated, simplifying the recycling process, and once compacted, they can be added to the rest of the thermoplastic waste in the mill and facilitate their milling.

## Claims

1. Compacting device of thin sheets of thermoplastic material that is **characterised in that** it includes an axial fan (1), which is found attached in the lower part of the essentially prismatic structure (10); an inlet nozzle (2) placed in the upper part of the prismatic structure (10); a heated mould (3) housed in the intermediate part of the prismatic structure (10) and as a continuation from the inlet nozzle (2) where this heated mould (3) is provided with a plurality of slots that allow the passing of the suction air current; a guiding conduit between the inlet nozzle (2) and the heated mould (3); and a slot (4) housed between the heated mould (3) and the fan (1).

2. Compacting device of thin sheets of thermoplastic material according to claim 1 that is **characterised in that** the axial fan (1) has power between 1000 and 2000 W.

3. Compacting device of thin sheets of thermoplastic material according to claim 1 that is **characterised in that** the heated mould reaches temperatures between 100 and 250º C.

4. Compacting device of thin sheets of thermoplastic material according to claim 1 that is **characterised in that** the heated mould (3) is dismountable and moveable.

5. Compacting device of thin sheets of thermoplastic material according to claim 1 that is **characterised in that** the heated mould (3) has a means for temperature control.

6. Compacting device of thin sheets of thermoplastic material according to claim 1 that is **characterised in that** the heated mould (3) includes temperature and safety sensors to avoid overheating.

## Patentansprüche

1. Verdichtungsvorrichtung aus dünnen Schichten aus thermoplastischem Material, die **dadurch gekennzeichnet ist, dass** sie einen Axialventilator (1) enthält, der im unteren Teil der im wesentlichen prismatischen Struktur (10) angebracht ist; eine Einlassdüse (2), die im oberen Teil der prismatischen 5 Struktur (10) angeordnet ist; eine beheizte Form (3), die in dem Zwischenteil der prismatischen Struktur (10) und als Fortsetzung von der Einlassdüse (2) untergebracht ist, wo diese erhitzte Form (3) mit einer Vielzahl von Schlitzen versehen ist, die den Durchgang des Saugens ermöglichen Luftstrom; eine Führungsleitung zwischen der Einlassdüse (2) und der beheizten Form (3); und einen Schlitz (4), der zwischen der beheizten Form (3) und dem Lüfter (1) untergebracht ist.

2. Verdichtungsvorrichtung aus dünnen Schichten aus thermoplastischem Material nach Anspruch 1, die **dadurch gekennzeichnet ist, dass** der Axialventilator (1) eine Leistung zwischen 1000 und 2000 W hat.

3. Verdichtungsvorrichtung aus dünnen Schichten aus thermoplastischem Material nach Anspruch 1, die **dadurch gekennzeichnet ist, dass** die erhitzte Form Temperaturen zwischen 100 und 250ºC erreicht.

4. Verdichtungsvorrichtung aus dünnen Schichten aus thermoplastischem Material nach Anspruch 1, die **dadurch gekennzeichnet ist, dass** die erhitzte Form (3) zerlegbar und beweglich ist.

5. Verdichtungsvorrichtung aus dünnen Schichten aus thermoplastischem Material nach Anspruch 1, die **dadurch gekennzeichnet ist, dass** die erhitzte Form (3) ein Mittel zur Temperaturregelung aufweist.

6. Verdichtungsvorrichtung aus dünnen Schichten aus thermoplastischem Material nach Anspruch 1, die **dadurch gekennzeichnet ist, dass** die erhitzte Form (3) Temperatur- und Sicherheitssensoren enthält, um eine Überhitzung zu vermeiden

## Revendications

1. Dispositif de compactage de feuilles minces de matière thermoplastique **caractérisé en ce qu'**il comporte un ventilateur axial (1), qui se trouve fixé dans la partie inférieure de la structure essentiellement prismatique (10); une buse d'entrée (2) placée dans la partie supérieure de la structure prismatique 5 (10); un moule chauffé (3) logé dans la partie intermédiaire de la structure prismatique (10) et en prolongement de la buse d'entrée (2) où ce moule chauffé (3) est pourvu d'une pluralité de fentes permettant le passage de l'aspiration courant d'air; un conduit de guidage entre la buse d'entrée (2) et le moule chauffé (3); et une fente (4) logée entre le moule chauffé (3) et le ventilateur (1).

2. Dispositif de compactage de feuilles minces de matière thermoplastique selon la revendication 1 **caractérisé en ce que** le ventilateur axial (1) a une puissance comprise entre 1000 et 2000 W. 15

3. Dispositif de compactage de feuilles minces de matière thermoplastique selon la revendication 1 qui est **caractérisé en ce que** le moule chauffé atteint des températures comprises entre 100 et 250 ° C.

4. Dispositif de compactage de feuilles minces de matière thermoplastique selon la revendication 1 qui est **caractérisé en ce que** le moule chauffé (3) est démontable et mobile.

5. Dispositif de compactage de feuilles minces de matière thermoplastique selon la revendication 1 qui est **caractérisé en ce que** le moule chauffé (3) comporte un moyen de contrôle de température.

6. Dispositif de compactage de feuilles minces de matière thermoplastique selon la revendication 1 qui est **caractérisé en ce que** le moule chauffé (3) comprend des capteurs de température et de sécurité pour éviter une surchauffe.
